# EUROPEAN PATENT APPLICATION

(11) **EP 4 755 804 A1**
(43) Date of publication of application: **10.06.2026**
(21) Application number: 24383309.2
(22) Date of filing: 03.12.2024
(51) Int. Cl.: B64G 1/22, B64G 1/64

(54) **MULTIPLE HOLD DOWN AND SEPARATION DEVICE FOR SPACECRAFT**

(71) Applicant: Airbus Defence and Space, S.A., 28906 Getafe (Madrid) (ES)
(72) Inventor: ALÉN IGLESIAS, Miguel Ángel, 28906 Getafe, Madrid (ES)
(74) Representative: Elzaburu S.L.P.

(57) **Abstract**

Multiple hold down and separation device (1) for spacecraft, capable to provide the separation of the spacecraft from a dispenser of a launcher, that comprises a central structure (2) comprising a first member (3) and a second member (4) coaxially arranged around an axis and configured to have a relative axial movement, elastic means (7, 7') configured to contact the inner surface of the first member (3) and the inner surface of the second member (4), a release bolt (8) connected to the second member (4), and an actuator (9) connected to the release bolt (8) of the central structure (2), and to the first member (3) through a support (10); at least two inclined guides (11) protruding radially from the central structure (2); at least two arms (12), each one of the arms (12) having a first part (12') and a second part (12"); at least two connecting levers (16) with a joint (17); and at least two hold-down assemblies (26) on the periphery of the device (1) and with a hold-down support (18) and a hold-down (20) configured to be attached to the spacecraft.

## Description

### Field of the invention

The invention refers to a device for providing hold down and structural continuity between a spacecraft and a launcher, which is also suitable for providing separation of the spacecraft from the launcher. The invention is applicable to provide hold down and separation of a satellite from a launcher, or antennae, solar panels, booms, etc. from satellites.

### Background of the invention

In the current space industry, payloads attached through discrete points (spacecrafts, antennae, solar arrays, booms, etc.) are mainly being latched and released through Holding-down & Release Mechanisms (HRM), requiring one release actuator each. The amount of release actuators is a driver of the costs and reliability of the separation system.

Each hold down and release mechanism is activated by one dedicated separation nut close to the spacecraft interface, resulting in some cases in hundreds of separation nuts per dispenser. The separation of these discrete hold down and release mechanisms generates a high shock during the separation due to the rapid release of the preload and the pyrotechnic actuator close to the spacecraft interface.

PCT/ES2019/070412 discloses a central-actuated mechanism. However, this central-actuated mechanism when installed at high preloads induces high levels of shock and therefore it is not recommended for medium or large satellites. In these cases, there is no centralized solution and, apart from the associated costs of point-to-point connections, these systems have high levels of shock induced in the satellites.

Accordingly, there is a need to provide a multiple hold down and separation device for spacecraft that can be used for medium and large satellites or spacecraft with lower levels of shock induced in the satellites or spacecraft

### Summary of the invention

The object of the invention is to provide a multiple hold down and separation device for spacecraft that overcomes the mentioned drawbacks.

The invention provides a multiple hold down and separation device for spacecraft capable to provide the separation of the spacecraft from a dispenser of a launcher, such that it can be switched from a locking position to an unlocking position, that comprises:
- a central structure comprising:
   - a first member and a second member coaxially arranged around an axis and configured to have a relative axial movement, each member comprising an external portion and a cylindrical internal portion, the external portions having an inner surface and an outer surface, such that the cylindrical internal portions serve as a guide for the relative axial movement between the first member and the second member, the external portions comprising a conical surface with an inclination between 0 and 45° with respect to a plane parallel to the central axis of the central structure, and the conical surface of the external portion of the first member being symmetrical with respect to the conical surface of the external portion of the second member,
   - elastic means such that a first elastic means is configured to contact the inner surface of the first member and a second elastic means is configured to contact the inner surface of the second member, both elastic means also being configured to support on a central plate,
   - a release bolt connected to the second member, and
   - an actuator connected to the release bolt of the central structure, and connected to the first member through a support;
- at least two inclined guides protruding radially from the central structure;
- at least two arms, each one of the arms having a first part comprising a first end portion configured to be retained in the central structure by the first member and the second member in the locking position, and to be retained by one stop in the inclined guide in the unlocking position, and a second end portion with a threaded section; and a second part comprising a first end portion with a threaded section and a second lubricated conical end portion, such that the first end portion of the first part has conical surfaces complementary to the internal surfaces of the external portions,
- an internally threaded sleeve configured to engage with the second lubricated conical end portion of the second part of the arm, and with the second end portion with a threaded section of the first part of the arm,
- at least two connecting levers, each one of the connecting levers connected to the corresponding first end portion with a threaded section of the second part of the arm by means of a joint with an internal nut on which the threaded section of the first end portion can be coupled, and
- at least two hold-down assemblies placed on the periphery of the device, each one of the hold-down assemblies comprising a hold-down support and a hold-down both of them with conical mating surfaces, each hold-down support comprising a torsion spring around an axis, each corresponding lever being articulated with the corresponding hold-down support through the corresponding torsion spring axis, the hold-down being configured to be attached to the spacecraft.

The invention also provides an assembly comprising a multiple hold down and separation device for spacecraft and a frame which contains inside the multiple hold down and separation device for spacecraft.

This configuration of the hold down and separation device for spacecraft provides the following advantages:
- Greater load reduction ratio, increased capacity with the same induced shock in the actuator.
- Isolation of the central actuator (shock generator) from the satellite at the moment of release.
- Reduced profile allowing installation on the exterior of the dispenser, with the possibility of internal installation occupying minimal volume inside the dispenser.
- Simplified installation and preload process.
- Single actuator for multiple interfaces.
- Mechanical synchronization allows the use of non-explosive actuators.
- Reduced manufacturing cost due to geometric simplification.
- Geometric adaptation only through the length of the tensors, maximum flexibility in interface positioning.
- Simple and recurring components for any required interface.

This configuration provides a high-capacity mechanism, capable of achieving high preloads at the interface.

It is also a versatile device, which allows to change the number of arms and their length according to the different needs.

Other characteristics and advantages of the present invention will be clear from the following detailed description of several embodiments illustrative of its object in relation to the attached figures.

### Brief description of drawings

Figure 1 shows a view of the multiple hold down and separation device of the invention attaching a spacecraft to the dispenser of a launcher (locking position).
Figure 2 shows a section view of the central structure and some parts attached to it.
Figure 3 shows a detail of the connection between the central structure and an arm in a locking position.
Figure 4 shows a detail of a hold-down assembly, a lever and an arm in the locking position.
Figure 5 shows the hold down and separation device of the invention in a locking position and in an unlocking position.
Figure 6 shows a detail of Figure 5, with a hold-down assembly, a lever and an arm in the unlocking position.
Figure 7 shows a view of an assembly with a multiple hold down and separation device of the invention of Figure 1 and a frame.
Figure 8 corresponds to Figure 7 with the frame in dotted lines.
Figure 9 is another view of the multiple hold down and separation device of the invention of Figure 1 (device without frame).

### Detailed description of the invention

The invention discloses a device 1 used for providing hold down and structural continuity between a spacecraft and a launcher, and also for the separation of the spacecraft from the launcher.

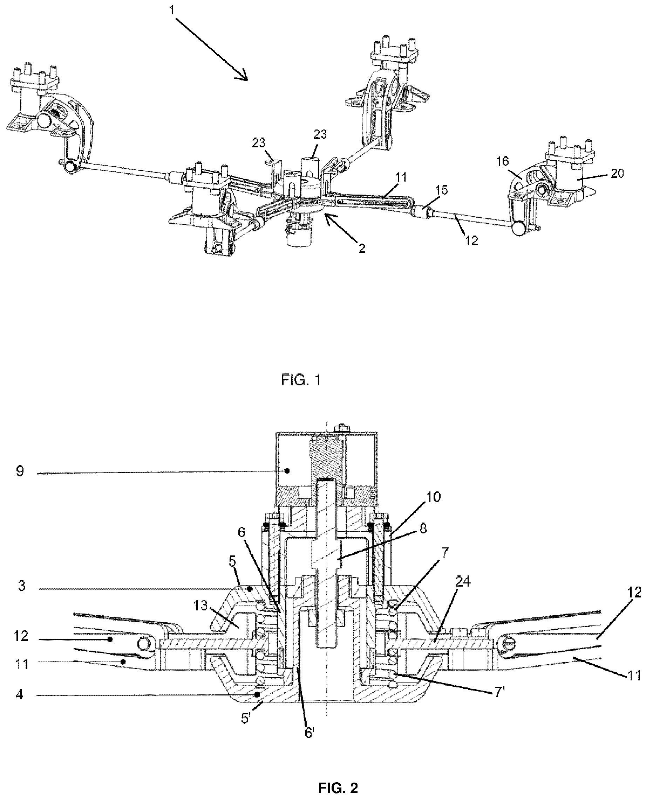

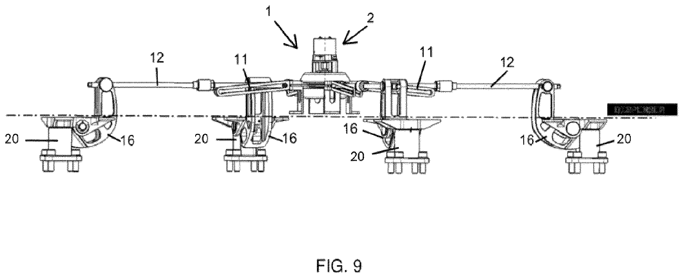

The multiple hold down and separation device 1 for spacecraft of the invention (shown, for instance, in figures 1 and 9) basically comprises these elements:
- a central structure 2,
- at least two inclined guides 11,
- at least two arms 12,
- at least two connecting levers 16, and
- at least two hold-down assemblies 26 placed on the periphery of the device 1.

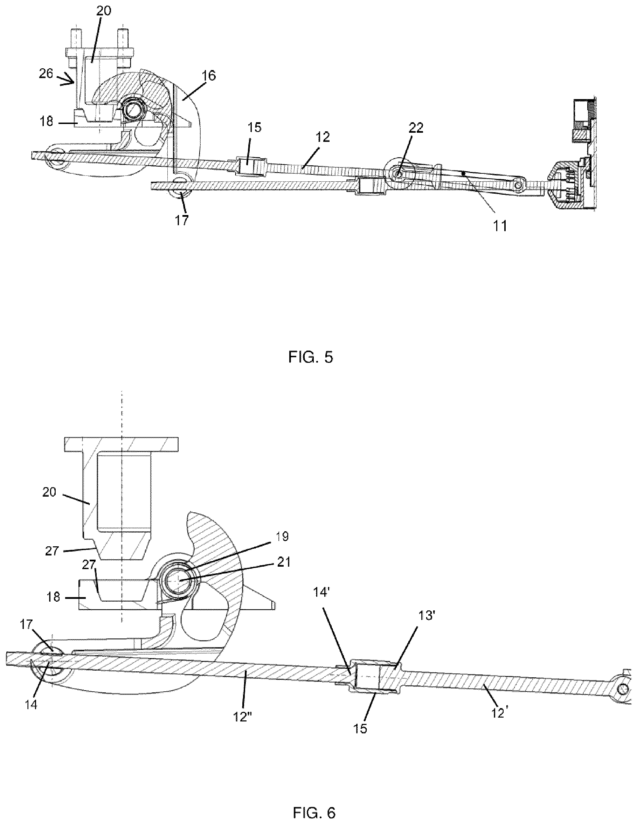

Figure 1 shows the multiple hold down and separation device 1 for spacecraft of the invention in a locking position, in which a spacecraft is attached to a dispenser of a launcher. Figure 6 shows the unlocking position, in which the spacecraft has been released from the dispenser of the launcher, with the multiple hold down and separation device 1 in an open mode.

Figure 5 shows both positions (locking and unlocking) of the multiple hold down and separation device 1 for spacecraft of the invention.

The main components of the central structure 2 can be seen in figure 2. The central structure 2 comprises:
- A first member 3 and a second member 4 coaxially arranged around an axis and configured to have a relative axial movement. Each member comprises an external portion 5, 5' and a cylindrical internal portion 6, 6', and the external portions 5, 5' have an inner surface and an outer surface, such that the cylindrical internal portions 6, 6' serve as a guide for the relative axial movement between the first member 3 and the second member 4.
- Elastic means 7, 7' such that a first elastic means 7 is configured to contact the inner surface of the first member 3 and a second elastic means 7' is configured to contact the inner surface of the second member 4, both elastic means 7, 7' also being configured to support on a central plate 24.
- A release bolt 8 connected to the second member 4, and:
- An actuator 9 connected to the release bolt 8 of the central structure 2, and connected to the first member 3 through a support 10.

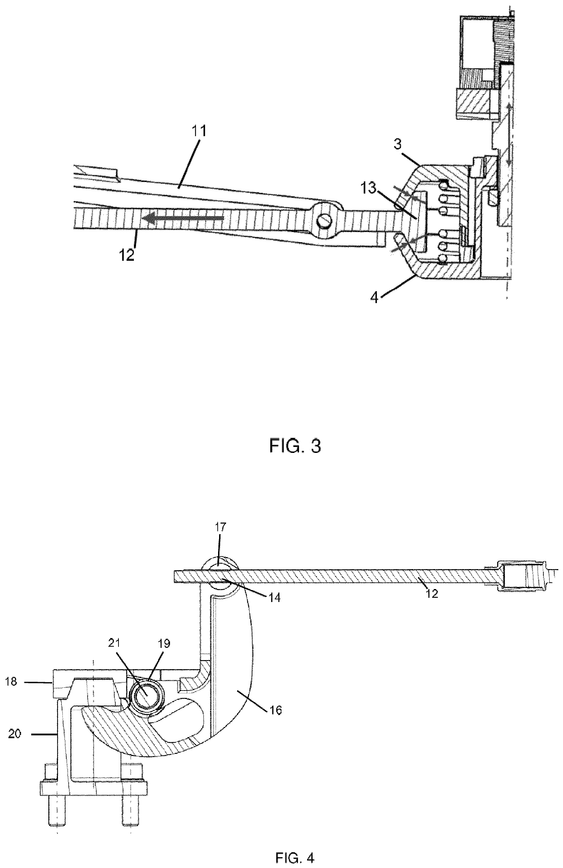

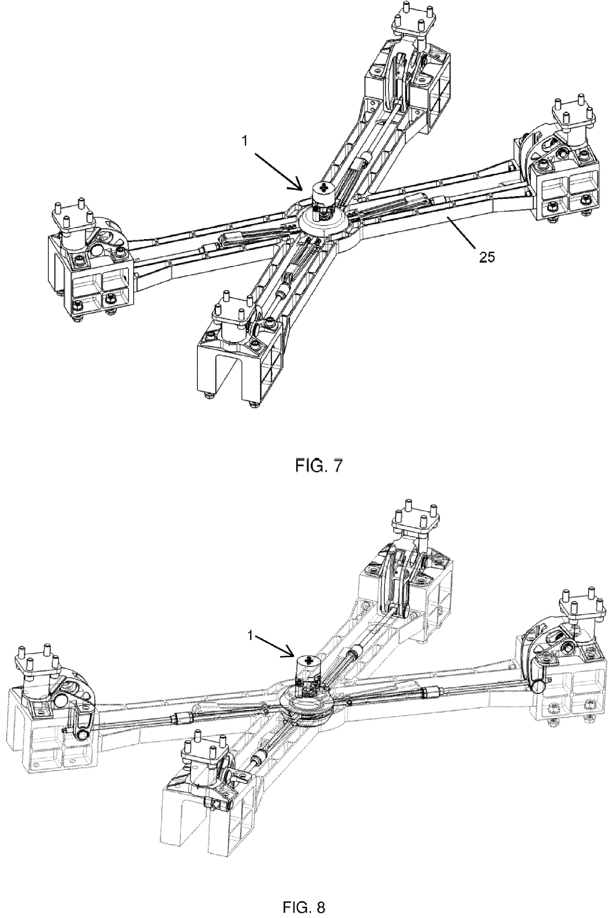

The multiple hold down and separation device 1 for spacecraft of the invention also comprises at least two inclined guides 11 protruding radially from the central structure 2, which can be seen, for example, in figures 1, 2, 3, 5, 7, 8 and 9.

The multiple hold down and separation device 1 for spacecraft of the invention also comprises at least two arms 12. Each one of the arms 12 comprises (see figure 6):
- a first part 12' comprising a first end portion 13 (see figure 2) configured to be retained in the central structure 2 by the first member 3 and the second member 4 in the locking position, and to be retained by one stop in the inclined guide 11 in the unlocking position (see figure 5), and a second end portion 13' with a threaded section; and
- a second part 12" comprising a first end portion 14 with a threaded section and a second lubricated conical end portion 14', such that the first end portion 13 of the first part 12' has conical surfaces complementary to the internal surfaces of the external portions 5, 5'.

The device 1 also comprises an internally threaded sleeve 15 (see figure 6) configured to engage with the second lubricated conical end portion 14' of the second part 12" of the arm 12, and with the second end portion 13' with a threaded section of the first part 12' of the arm 12.

The device 1 also comprises at least two connecting levers 16. Each one of the connecting levers 16 is connected to the corresponding first end portion 14 with a threaded section of the second part 12" of the arm 12 by means of a joint 17 with an internal nut on which the threaded section of the first end portion 14 can be coupled (see figure 6). The rotation of the first end portion 14 with a threaded section on the internal nut of the joint 17 can provide axial preload to the corresponding arm 12.

The device 1 also comprises at least two hold-down assemblies 26 placed on the periphery of the device 1. Each hold-down assembly 26 comprises a hold-down support 18 and a hold-down 20, both of them with conical mating surfaces 27 (see figure 6). Each hold-down support 18 comprises a torsion spring 19 around a torsion spring axis 21. Each corresponding connecting lever 16 is articulated with the corresponding hold-down support 18 through the corresponding torsion spring axis 21.

Figures 1, 7, 8 and 9 show an embodiment of the multiple hold down and separation device 1 for spacecraft of the invention that comprises four arms 12, four hold-down assemblies 26, four inclined guides 11 and four connecting levers 16. These hold-down assemblies 26 may be arranged in a rectangular configuration or in a square configuration

The device 1 may additionally comprise a latch 22 on an end of each inclined guide 11, the latch being suitable for retaining the corresponding first part 12' of an arm 12, as it can be seen in figure 5.

It is possible to use several kinds of actuators 9 to release the release bolt 8. The most common ones are the non explosive actuator (named NEA) and the pyrotechnic actuator, which are well-known in the prior art.

The multiple hold down and separation device 1 for spacecraft of the invention may comprise at least two supports 23 connected to the central structure 2. In figure 1 these supports 23 (in the form of legs, and in the number of four in this embodiment) can be seen, protruding from the central structure 2.

In another embodiment, a frame 25 is provided, which contains inside it the multiple hold down and separation device 1 for spacecraft. If the device 1 is if pre-assembled and pre-loaded, it may be advantageous to provide the assembly comprising the device 1 together with the frame 25.

The joint 17 connecting the lever 16 and the arm 12 induces the preload on the arm 12 through traction, by means of the rotation of the first end portion 14 with a threaded section of the second part 12" of the arm 12 on the internal nut of the joint 17, and the preload is also applied to the connecting levers 16. The connecting lever 16 multiplies this tension and applies it to the contact surface (interface) with the hold-down 20. This tension multiplication has the benefit that the preload applied by the arm 12 is between 2 and 3 times less than the current tension transmitting the flight loads.

When the arms 12 are preloaded, the first end portion 13 of the first part 12' of the arm 12, configured to be retained in the central structure 2 by the first member 3 and the second member 4, will transmit the load to the central structure 2, generating a reduced axial reaction thanks to the conical geometry of the inner surfaces of the external portions 5, 5', but enough to ensure that the device 1 cannot lock in this position, ensuring a proper motorization.

Taking into account the two reduction systems between the interfaces and the actuator, the tension seen by this device 1 is very low, so the shock exported during opening will be minimal.

Regarding shock transmission, the entire central structure 2, at the moment of release, is suspended on springs and dampers, almost completely isolating it from the dispenser structure and even more from the spacecraft interfaces.

During opening, the central structure 2 is self-guided and will reach its parking position thanks to internal mechanisms. The arms 12 in their translational movement as well as the connecting levers 16 in their rotational movement will be guided by radial inclined guides 11 that work as stoppers and latches upon reaching their final parking position (see figure 5). In this position, the connecting levers 16 allow the hold-down 20 and the spacecraft to be ejected.

In order to release a spacecraft from a dispenser of a launcher, a method can be used that uses a multiple hold down and separation device 1 for spacecraft of the invention, such that in a hold down position the spacecraft is attached to the dispenser at a number of discrete points by means of the corresponding hold-down assemblies 26 and connecting levers 16. The method comprises the following steps:
- electrical command from the launcher to activate the actuator 9,
- the release bolt 8 is released and the elastic means 7, 7' load the first member 3 and the second member 4, causing the separation of the first member 3 and the second member 4 and allowing the first end portion 13 of the first part 12' of the arm 12 to get out of the central structure 2,
- the arms 12 move in translation and are guided in their translational movement by the radial inclined guides 11,
- the connecting levers 16 rotate around the axis 21 (figure 6), and
- the end of each connecting lever 16 separates from the contact surface of the hold-down 20 to unlock the corresponding hold-down 20, allowing the separation of the spacecraft from the dispenser.

Although the present invention has been fully described in connection with preferred embodiments, it is evident that modifications may be introduced within the scope thereof, not considering this as limited by these embodiments, but by the contents of the following claims.

## Claims

1. Multiple hold down and separation device (1) for spacecraft, capable to provide the separation of the spacecraft from a dispenser of a launcher, such that it can be switched from a locking position to an unlocking position, **characterized in that** it comprises:
- a central structure (2) comprising:
- a first member (3) and a second member (4) coaxially arranged around an axis and configured to have a relative axial movement, each member comprising an external portion (5, 5') and a cylindrical internal portion (6, 6'), the external portions (5, 5') having an inner surface and an outer surface, such that the cylindrical internal portions (6, 6') serve as a guide for the relative axial movement between the first member (3) and the second member (4), the external portions (5, 5') comprising a conical surface with an inclination between 0 and 45º with respect to a plane parallel to the central axis of the central structure, and the conical surface of the external portion (5) of the first member (3) being symmetrical with respect to the conical surface of the external portion (5') of the second member (4),
- elastic means (7, 7') such that a first elastic means (7) is configured to contact the inner surface of the first member (3) and a second elastic means (7') is configured to contact the inner surface of the second member (4), both elastic means (7, 7') also being configured to support on a central plate (24),
- a release bolt (8) connected to the second member (4), and
- an actuator (9) connected to the release bolt (8) of the central structure (2), and connected to the first member (3) through a support (10);
- at least two inclined guides (11) protruding radially from the central structure (2);
- at least two arms (12), each one of the arms (12) having a first part (12') comprising a first end portion (13) configured to be retained in the central structure (2) by the first member (3) and the second member (4) in the locking position, and to be retained by one stop in the inclined guide (11) in the unlocking position, and a second end portion (13') with a threaded section; and a second part (12") comprising a first end portion (14) with a threaded section and a second lubricated conical end portion (14'), such that the first end portion (13) of the first part (12') has conical surfaces complementary to the internal surfaces of the external portions (5, 5'),
- an internally threaded sleeve (15) configured to engage with the second lubricated conical end portion (14') of the second part (12") of the arm (12), and with the second end portion (13') with a threaded section of the first part (12') of the arm (12),
- at least two connecting levers (16), each one of the connecting levers (16) connected to the corresponding first end portion (14) with a threaded section of the second part (12") of the arm (12) by means of a joint (17) with an internal nut on which the threaded section of the first end portion (14) can be coupled, and
- at least two hold-down assemblies (26) placed on the periphery of the device (1), each one of the hold-down assemblies (26) comprising a hold-down support (18) and a hold-down (20) both of them with conical mating surfaces (27), each hold-down support (18) comprising a torsion spring (19) around an axis (21), each corresponding lever (16) being articulated with the corresponding hold-down support (18) through the corresponding torsion spring axis (21), the hold-down (20) being configured to be attached to the spacecraft.

2. Multiple hold down and separation device (1) for spacecraft, according to claim 1, that additionally comprises a latch (22) on an end of the inclined guide (11) suitable for retaining the corresponding arm (12).

3. Multiple hold down and separation device (1) for spacecraft, according to any of claims 1 or 2, that comprises four arms (12) and four hold-down supports (18).

4. Multiple hold down and separation device (1) for spacecraft, according to claim 3, in which the hold-down supports (18) are arranged in a rectangular configuration.

5. Multiple hold down and separation device (1) for spacecraft, according to claim 3, in which the hold-down supports (18) are arranged in a square configuration.

6. Multiple hold down and separation device (1) for spacecraft, according to any of the previous claims, wherein the actuator (9) is a non explosive actuator or a pyrotechnic actuator.

7. Multiple hold down and separation device (1) for spacecraft, according to any of the previous claims, which comprises at least two supports (23) connected to the central structure (2) and configured to be attached to a dispenser of a launcher.

8. Assembly comprising a multiple hold down and separation device (1) for spacecraft of any of the previous claims and a frame (25) which contains inside the multiple hold down and separation device (1) for spacecraft.
